# FASCICULE DE BREVET EUROPEEN

(11) **EP 3 750 170 B1**
(45) Date de publication et mention de la délivrance du brevet: **05.01.2022**
(21) Numéro de dépôt: 19704313.6
(22) Date de dépôt: 08.02.2019
(51) Int. Cl.: G21C 7/14, G21C 15/02, G21C 1/32

(54) **ARCHITECTURE DE RÉACTEUR NUCLÉAIRE INTÉGRÉ LIMITANT LES CONTRAINTES APPLIQUÉES AUX MÉCANISMES INTÉGRÉS**
INTEGRIERTE KERNREAKTORARCHITEKTUR ZUR BEGRENZUNG DER BELASTUNG DER INTEGRIERTEN MECHANISMEN
INTEGRATED NUCLEAR REACTOR ARCHITECTURE LIMITING THE STRESS APPLIED TO THE INTEGRATED MECHANISMS

(30) Priorité: 09.02.2018 FR 1851115
(43) Date de publication de la demande: 16.12.2020
(73) Titulaire: Société Technique pour l'Energie Atomique, 91190 Villiers Le Bacle (FR)
(72) Inventeur: BRUN, Michel, 13109 SIMIANE-COLLONGUE (FR); DUMANOIS, Charles, 83560 RIANS (FR)
(74) Mandataire: Lavoix
(86) Numéro de dépôt international: PCT/EP2019/053139
(87) Numéro de publication internationale: WO 2019/154988

(56) Documents cités:
- CN-A- 106 887 261
- FR-A1- 3 039 695
- US-A1- 2012 263 270
- Kusunoki T ET AL: "Design of advanced integral-type marine reactor, MRX", NUCLEAR ENGINEERING AND DESIGN, vol. 201, no. 2-3, 1 October 2000 (2000-10-01), pages 155-175, XP055837530, NL ISSN: 0029-5493, DOI: 10.1016/S0029-5493(00)00285-5

## Description

La présente invention concerne un réacteur nucléaire comprenant :
- une cuve ayant un axe central, contenant un liquide primaire,
- un cœur comprenant du combustible nucléaire, le cœur étant agencé dans le volume interne de la cuve,
- au moins une pompe primaire générant un débit primaire principal de liquide primaire dans la cuve, le débit primaire principal traversant le cœur, montant selon une direction parallèle à l'axe central dans une partie montante du débit primaire principal et descendant au travers d'au moins un générateur de vapeur situé en périphérie dans la cuve dans une partie descendante du débit primaire principal,
- au moins un organe de contrôle de la réactivité du cœur, l'organe de contrôle s'étendant selon une direction respective parallèle à l'axe central et étant aligné avec le cœur selon ladite direction respective,
- au moins un mécanisme d'entraînement de l'organe de contrôle, agencé dans le volume interne de la cuve et lié à l'organe de contrôle,
- un pressuriseur situé dans une partie supérieure de la cuve selon l'axe central, le pressuriseur étant en communication avec le fluide primaire,
   le mécanisme d'entraînement comprenant un actionneur électrique et un mécanisme de transmission.

Les documents FR 3 039 695 et US 2015/0243377 A1 décrivent un réacteur nucléaire comprenant une pluralité de mécanismes d'entraînement d'organes de contrôle de la réactivité du cœur. Ces mécanismes sont entièrement logés dans la cuve. Cela permet notamment de réduire la hauteur totale du réacteur nucléaire.

Chaque mécanisme d'entraînement comprend notamment un moteur entièrement immergé dans le liquide primaire à l'intérieur de la cuve.

Dans ce type de réacteur, l'ensemble des mécanismes immergés sont typiquement positionnés dans le débit primaire principal.

Cependant, le liquide primaire du débit primaire principal traverse le cœur avant d'interagir avec certains mécanismes immergés, dont les mécanismes d'entraînement des organes de contrôle.

D'une part, le débit primaire présente un débit très important pour refroidir le cœur. Les mécanismes d'entraînement présentent des jeux mécaniques, notamment pour permettre le mouvement des organes de contrôle, de sorte qu'un liquide à débit très important est susceptible d'endommager la structure des mécanismes d'entraînement.

D'autre part, les produits de la fission venant du cœur sont susceptibles d'interagir avec les mécanismes par irradiation. En particulier, le moteur est, par exemple, un électromoteur comportant une masse non négligeable de métaux activables par irradiation comme du cobalt.

Un but de l'invention est donc de fournir un réacteur nucléaire ayant une dimension réduite et dans lequel les interactions entre le cœur et les mécanismes immergés sont réduites.

Dans ce but, l'objet de l'invention est un réacteur nucléaire du type précité dans lequel l'actionneur électrique est entièrement immergé dans le fluide primaire, et en ce que l'actionneur électrique est situé en dehors du débit primaire principal.

Le réacteur nucléaire peut en outre présenter une ou plusieurs des caractéristiques ci-dessous, considérée(s) individuellement ou selon toutes les combinaisons techniquement possibles :
- le débit primaire principal présente une zone de retournement entre la partie montante et la partie descendante, la circulation du fluide formant un rebroussement dans la zone de retournement, l'actionneur électrique étant situé au-dessus de la zone de retournement selon la direction de l'axe central et sous le pressuriseur selon une direction parallèle à l'axe central,
- il comprend une ligne de refroidissement de l'actionneur électrique, la ligne de refroidissement prélevant du liquide primaire du débit primaire principal en sortie du cœur ou à un refoulement de la pompe primaire, la durée de parcours entre le prélèvement du liquide primaire du débit primaire principal et le passage du liquide primaire au niveau du moteur étant supérieure à une durée minimale,
- la durée minimale est supérieure à 50 secondes, préférentiellement comprise entre 50 secondes et 150 secondes,
- l'actionneur électrique comprend :
   - un moteur comprenant un stator et un rotor susceptible d'appliquer un couple rotatif, et
   - un système de largage de l'organe de contrôle apte à larguer par chute gravitaire l'organe de contrôle dans le cœur ; et,
   le mécanisme de transmission comprend :
   - un dispositif menant comprenant une partie d'entraînement, la partie d'entraînement étant liée au moteur de sorte que le couple rotatif du moteur est appliqué à la partie d'entraînement,
   - un organe mené comprenant l'un d'une vis ou d'un écrou, l'organe mené étant entraîné en rotation par la partie d'entraînement,
   - un organe de transmission formant l'autre de la vis ou de l'écrou solidaire de l'organe de contrôle,
      la vis et l'écrou coopérant de manière à ce qu'une rotation de la partie d'entraînement du dispositif menant par rapport au stator se traduise par une translation de l'organe de contrôle parallèlement à l'axe central,
- l'organe de transmission porte l'écrou, l'organe mené comprenant la vis, l'écrou coopérant avec la vis sur le diamètre externe de ladite vis,
- l'organe mené présente un orifice s'étendant selon la direction respective au moins dans une partie supérieure de l'organe mené sur une longueur supérieure à un déplacement maximal de l'organe de contrôle, la partie d'entraînement du dispositif menant présentant une section polygonale s'étendant au moins partiellement dans ledit orifice sur la longueur de l'orifice, l'orifice présentant une section polygonale correspondante au moins dans une partie supérieure, l'organe mené et la partie d'entraînement étant solidaires en rotation,
- l'organe mené présente dans une partie supérieure au moins un trou traversant reliant l'orifice à l'extérieur de l'organe mené,
- le largage de l'organe de contrôle est obtenu par largage de l'organe mené
- l'organe mené comprend un épaulement, le système de largage comprenant au moins un élément déplaçable entre une position de maintien et une position de largage, l'élément déplaçable s'étendant sous l'épaulement selon la direction respective dans la position de maintien et ne s'étendant pas sous l'épaulement selon la direction respective dans la position de largage.

D'autres caractéristiques et avantages de l'invention ressortiront de la description détaillée qui en est donnée ci-dessous, à titre indicatif et nullement limitatif, en référence aux figures annexées, parmi lesquelles :
- la figure 1 est une représentation schématique en coupe d'un mode de réalisation d'un réacteur nucléaire selon l'invention,
- la figure 2 est une représentation schématique en coupe d'un mécanisme d'entraînement d'un organe de contrôle du réacteur nucléaire de la figure 1, en position armée,
- la figure 3 est une vue en perspective et en coupe de la partie supérieure et de la partie inférieure de l'organe mené du mécanisme d'entraînement de la figure 2, et
- la figure 4 est une représentation schématique en coupe du mécanisme d'entraînement de la figure 2, en position larguée.

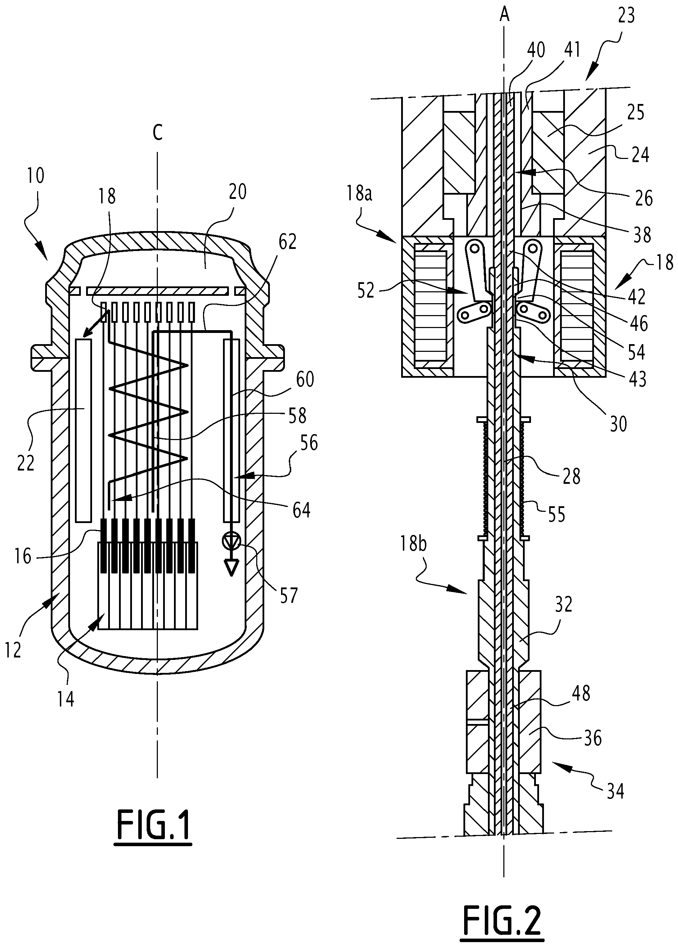

Le réacteur nucléaire 10 représenté sur la figure 1 est un réacteur du type SMR (pour *Small and Medium Reactor,* ou réacteur petit et moyen). Ce type de réacteur équipe par exemple de petites installations nucléaires, d'une puissance de quelques centaines de mégawatt électrique (MWe). Ce réacteur est typiquement du type à eau pressurisé (PWR). En variante, le réacteur est de type à eau bouillante (BWR).

Le réacteur 10 comprend une cuve 12 ayant un axe central C, une pluralité d'assemblages de combustible nucléaire formant un cœur 14 agencé dans le volume interne de la cuve 12, au moins un organe de contrôle 16 de la réactivité du cœur 14 et au moins un mécanisme d'entraînement 18 d'organe de contrôle. Plus particulièrement, le réacteur 10 comprend une pluralité d'organes de contrôle 16 et un mécanisme d'entraînement 18 par organe de contrôle 16.

Sur la figure 1, seul un petit nombre d'assemblages de combustible nucléaire, d'organes de contrôle et de mécanismes d'entraînement ont été représentés. En réalité, chaque réacteur nucléaire comporte un grand nombre d'assemblages de combustible nucléaire et de même un grand nombre d'organes de contrôle et de mécanismes d'entraînement.

L'axe central C est typiquement vertical ou sensiblement vertical. La cuve 12 est sensiblement de révolution autour de l'axe central C.

Dans la présente description, les termes inférieur et supérieur, le haut et le bas, le dessus et le dessous, s'entendent relativement à une direction verticale, correspondant sensiblement à l'axe central C.

La cuve 12 contient le liquide primaire du réacteur nucléaire.

Le réacteur 10 comprend par ailleurs un pressuriseur 20 situé dans une partie supérieure de la cuve 12 selon l'axe central C, le pressuriseur 20 étant en communication avec le fluide primaire pour maintenir le fluide primaire à une pression donnée.

Plus particulièrement, le pressuriseur 20 s'étend sur toute la partie supérieure de la cuve 12 à partir d'une certaine hauteur.

Le réacteur 10 comprend en outre un ou des générateurs de vapeur 22 logés dans le volume interne de la cuve 12 et s'étendant autour des organes de contrôle 16 et des mécanismes d'entraînement 18. Le(s) générateur(s) de vapeur 22 présente(nt) une symétrie cylindrique autour de l'axe central C.

Les assemblages de combustible nucléaire sont des éléments allongés parallèlement à l'axe central C, de forme prismatique, placés les uns contre les autres.

Les organes de contrôle 16 de la réactivité du cœur sont connus sous le nom de grappe de contrôle ou barre de contrôle. Chacun comporte une partie constituée d'un matériau neutrophage ou absorbant neutronique. Chaque organe de contrôle est de forme allongé parallèlement à l'axe central C et de section adaptée pour permettre l'insertion de l'organe de contrôle dans un canal non représenté ménagé dans l'assemblage de combustible nucléaire.

Chaque organe de contrôle est aligné avec le cœur selon une direction parallèle à l'axe central C.

Les mécanismes d'entraînement 18 sont agencés dans le volume interne de la cuve. Chaque mécanisme d'entraînement 18 est typiquement lié à un ou plusieurs organes de contrôle 16.

Les mécanismes d'entraînement 18 sont également appelés CRDM de l'acronyme en langue anglaise « *Control Rod Drive Mechanism ».*

Chaque mécanisme d'entraînement 18 est prévu pour déplacer un des organes de contrôle 16 selon un axe A parallèle à l'axe central C, de manière à l'extraire entièrement hors de l'assemblage de combustible nucléaire correspondant, ou à l'insérer sur une longueur déterminée à l'intérieur de l'assemblage de combustible nucléaire.

Comme visible sur la figure 2, chaque mécanisme d'entraînement 18 comprend un actionneur électrique 18a et un mécanisme de transmission 18b.

L'actionneur électrique 18a comprend un moteur 23 comprenant un stator 24 et un rotor 25 susceptible d'être entraîné en rotation.

Le mécanisme de transmission 18b comprend :
- un dispositif menant 26 comprenant une partie d'entraînement 28, le dispositif menant 26 étant lié au moteur 23 de sorte que le couple rotatif du rotor 25 est appliqué à la partie d'entraînement 28,
- un organe mené 30 comprenant l'un 32 d'une vis ou d'un écrou,
- un organe de transmission 34 formant l'autre 36 de la vis ou de l'écrou.

L'actionneur électrique 18a est situé sous le pressuriseur 20 selon une direction parallèle à l'axe central C.

L'actionneur électrique 18a est entièrement immergé dans le liquide primaire à l'intérieur de la cuve. Plus généralement, les mécanismes d'entraînement 18 sont entièrement immergés dans le liquide primaire à l'intérieur de la cuve 12. Aucun des éléments des mécanismes d'entraînement 18 ne fait saillie en dehors de la cuve 12. Tout particulièrement, le moteur 23, le dispositif menant 26, l'organe mené 30 et l'organe de transmission 34 sont immergés dans le liquide primaire à l'intérieur de la cuve 12. Typiquement, tous ces éléments sont immergés en permanence dans le liquide primaire.

Seuls des conducteurs électriques raccordant le mécanisme d'entraînement à une source de courant électrique ou à des organes électroniques de détection sortent de la cuve.

Ainsi, le réacteur 10 présente une hauteur totale réduite.

Le stator 24 présente une forme générale cylindrique autour de l'axe A parallèlement à l'axe central C.

Le rotor 25 est disposé à l'intérieur du stator 24 et présente une forme générale cylindrique coaxiale à l'axe A. Il présente un passage central 38 s'étendant selon l'axe A.

Le dispositif menant 26, outre la partie d'entraînement 28, comprend une partie de liaison 40 engagée dans le passage central 38, de sorte que le rotor 25 et la partie de liaison 40 soient solidaires en rotation, par exemple, à l'aide d'une pièce de liaison 41 s'étendant entre le rotor 25 et la partie de liaison 40.

Le dispositif menant 26 comprend une tige 42 s'étendant parallèlement à l'axe central C selon l'axe A. La partie d'entraînement 28 constitue le tronçon inférieur de ladite tige et la partie de liaison 40 le tronçon supérieur de ladite tige. La partie d'entraînement 28 est solidaire de la partie de liaison 40.

La tige 42 est de grande dimension selon l'axe A.

La tige 42 s'étend vers le bas selon l'axe A au-delà du moteur 23.

Dans l'exemple représenté, la partie d'entraînement 28 présente une section polygonale, plus particulièrement une section carrée, la section étant prise perpendiculairement à l'axe C.

L'organe mené 30 s'étend autour de l'axe A. L'organe mené 30 présente ici une forme globale tubulaire.

Dans une partie supérieure 43, l'organe mené 30 présente, par exemple, une forme extérieure cylindrique de section polygonale, plus particulièrement carrée. En dehors de la partie supérieure, l'organe mené 30 présente par exemple une forme extérieure cylindrique de section circulaire.

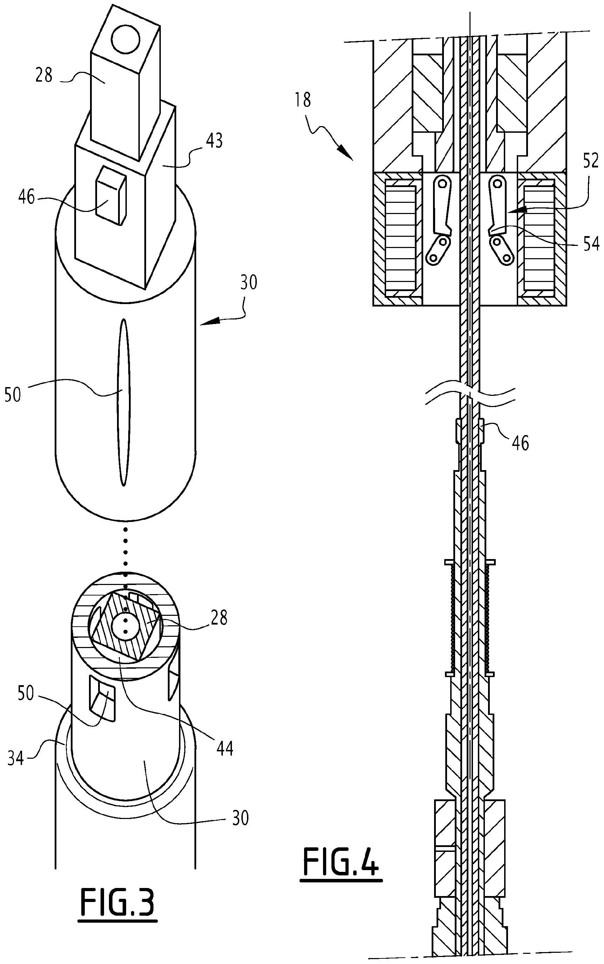

L'organe mené 30 présente un orifice 44 visible sur la figure 3 s'étendant selon l'axe A au moins dans une partie supérieure de l'organe mené sur une longueur supérieure à un déplacement maximal de l'organe de contrôle 16, plus particulièrement ici sur toute la hauteur selon l'axe A dudit organe mené 30.

Dans une partie supérieure de l'orifice 44, l'orifice 44 présente une section polygonale correspondant à la section polygonale de la partie d'entraînement 28. La partie supérieure de l'orifice 44 est, par exemple, définie dans la partie supérieure 43 de l'organe mené 30, de sorte qu'à ce niveau l'organe mené forme une bague de forme polyédrique. Dans une partie inférieure de l'orifice 44, l'orifice 44 présente une section circulaire. La section polygonale de la partie d'entraînement 28 est comprise dans ladite section circulaire.

La partie d'entraînement 28 s'étend dans l'orifice 44.

L'organe mené 30 coopère avec la partie d'entraînement 28 au niveau de la partie supérieure de l'orifice 44, de manière à ce qu'une rotation soit transmise entre la partie d'entraînement 28 et l'organe mené 30. Ainsi, une rotation du rotor 25 est transmise à l'organe mené 30 par le dispositif menant 26.

L'organe mené 30 présente, par ailleurs, un épaulement 46 sur sa surface externe, plus particulièrement dans sa partie supérieure.

L'organe mené 30 présente, en outre, un filetage 48 sur sa surface externe, plus particulièrement dans une partie inférieure. Ainsi l'organe mené comprend ici la vis.

L'organe mené 30 présente, par ailleurs, au moins un trou traversant 50 reliant l'orifice 44 à la surface externe de la vis, plus particulièrement au-dessus du filetage 48. Le trou traversant 50 permet notamment à un liquide s'étendant dans l'orifice 44 d'être évacué de l'intérieur de l'organe mené 30, lors de mouvements rapides de l'organe mené 30 dans l'orifice 44.

D'une part, l'organe de transmission 34 est lié à l'organe de contrôle 16. Plus particulièrement, l'organe de transmission 34 est solidaire en translation selon l'axe A avec l'organe de contrôle 16.

D'autre part, l'organe de transmission 34 coopère avec l'organe mené 30.

L'organe de transmission 34 porte ici l'écrou.

L'écrou coopère avec l'organe mené 30 au niveau du filetage 48.

De manière générale, la vis et l'écrou coopèrent de manière à ce qu'une rotation de l'organe mené 30 par rapport à la cuve 12 se traduit par une translation de l'organe de transmission 34 selon l'axe A. Ainsi une rotation de la partie d'entraînement 28 du dispositif menant 26 par rapport au stator 24 se traduit par une translation de l'organe de contrôle 16 parallèlement à l'axe central C.

Plus particulièrement, l'organe de transmission 34 est bloqué en rotation autour de l'axe A, de manière à ce qu'une rotation de l'organe mené 30 autour de l'axe A entraîne une translation de l'organe de transmission 34 selon l'axe A par déplacement de l'écrou sur le filetage 48.

Le mécanisme d'entraînement comprend, par exemple, un fourreau entourant l'organe de transmission 34 et présentant une rainure selon l'axe A, apte à coopérer avec une nervure correspondante présente dans l'organe de transmission 34.

Ainsi, la coopération entre la rainure et la nervure empêche la rotation de l'organe de transmission 34 mais permet une translation selon l'axe A, par déplacement de la nervure dans la rainure.

Alternativement, l'organe de transmission 34 présente une rainure selon l'axe A et le fourreau présente la nervure correspondante.

Une rotation de l'organe mené 30 dans un premier sens entraîne une descente de l'organe de transmission selon l'axe A, alors qu'une rotation de l'organe mené 30 dans un deuxième sens opposé au premier sens entraîne une montée de l'organe de transmission selon l'axe A. Plus particulièrement, une rotation du rotor 25 selon le premier sens entraîne une descente de l'organe de contrôle 16, alors qu'une rotation du rotor selon le deuxième sens entraîne une montée de l'organe de contrôle 16.

Ainsi, par entraînement en rotation du rotor 25, il est possible de contrôler l'enfoncement de l'organe de contrôle 16 dans l'assemblage de combustible nucléaire, de manière à contrôler la réactivité du cœur 14.

L'utilisation d'un écrou coopérant avec la surface externe de l'organe mené permet notamment d'utiliser des galets et/ou des rouleaux satellites autour de l'écrou pour limiter les frottements de l'écrou lors de la translation.

L'actionneur électrique 18b du mécanisme d'entraînement 18 comprend par ailleurs un système de largage 52 de l'organe de contrôle 16 apte à larguer par chute gravitaire l'organe de contrôle 16 dans le cœur 14.

Le système de largage 52 permet de faire passer le mécanisme d'entrainement 18 d'une position armée, dans laquelle la hauteur de l'organe de contrôle 16 enfoncé dans le cœur 14 est contrôlé par rotation du moteur 23, à une position larguée, dans laquelle l'organe de contrôle 16 est enfoncé dans le cœur 14 selon une hauteur maximale.

Le largage de l'organe de contrôle 16 est ici obtenu par largage de l'organe mené 30, entraînant ici la chute par gravité de l'organe de transmission 34 et ainsi de l'organe de contrôle 16.

Le largage est ici contrôlé par une bobine, la bobine étant alimentée de sorte à maintenir le mécanisme d'entraînement en position armée en fonctionnement normal du réacteur. En cas de problème, une coupure de l'alimentation de la bobine entraîne le largage gravitaire et le passage de la position armée à la position larguée.

Plus particulièrement, le système de largage 52 comprend au moins un élément déplaçable 54 entre une position de maintien et une position de largage. L'élément déplaçable 54 est maintenu par la bobine. Dans la position de maintien, l'élément déplaçable 54 s'étend sous l'épaulement selon l'axe A de manière à ce que l'épaulement 46 s'appuie sur ledit élément déplaçable 54 et à ce que l'organe mené 30 soit maintenu par le système de largage 52. Dans la position de largage, l'élément déplaçable 54 ne s'étend plus sous l'épaulement selon l'axe central de manière à larguer l'organe mené 30 qui est entraîné par chute gravitaire selon l'axe A, comme visible sur la figure 4.

L'élément déplaçable 54 est, par exemple, un ou plusieurs linguets.

Lors du largage, du liquide est susceptible d'être contenu dans l'organe mené 30, le ou les trous 50 permettant alors une évacuation du liquide rapide.

En complément, un ressort d'impulsion 55 accélère la chute dans les premiers instants.

Le temps de chute est particulièrement court. En effet, du fait que la liaison vis-écrou est larguée avec l'organe mené, la chute correspond à un simple mouvement de translation et non au mouvement hélicoïdal d'une vis ou d'un écrou.

Les frottements mécaniques sont réduits.

La forme polyédrique de la partie d'entraînement 28 dans la partie inférieure cylindrique de l'orifice 44 de l'organe mené 30 est particulièrement avantageuse car elle limite les frottements mécaniques et/ou hydrauliques entre l'organe mené 30 et l'organe menant 26 lors de la chute gravitaire de l'organe mené 30, ce qui permet de réduire le temps de chute pendant le largage.

Par ailleurs, l'agencement de l'organe mené 30 autour de l'organe menant 26 est tel que l'organe mené 30 est maintenu autour de l'organe menant 26 après le largage, notamment grâce à la longueur de l'organe menant 26. Plus particulièrement, la tige 42 s'étend loin vers le bas selon l'axe A de manière à ce que la tige 42 reste engagée dans la partie supérieure de l'organe mené lorsque l'organe de contrôle 16 est en position larguée.

Il est alors facile de récupérer l'organe mené 30, ainsi que l'ensemble porté par l'organe mené 30, pour le remonter autour de l'organe menant 26, de manière à repasser le mécanisme d'entraînement 18 en position armée. Par exemple, la remontée de l'organe mené 30 est réalisée par rotation de la vis qui remonte alors par coopération avec l'écrou. Une fois que l'organe menant 32 est remonté en position haute, l'élément déplaçable 54 est alors déplacé en position de maintien ce qui permet de retourner à la situation avant largage.

En outre, la cuve présente un débit primaire principal 56 de liquide primaire visible sur la figure 1.

Le débit primaire principal 56 traverse le cœur 14 puis monte selon une direction parallèle à l'axe central C dans une partie montante 58 du débit primaire principal 56 puis descend au travers du générateur de vapeur 22 dans une partie descendante 60 du débit primaire principal 56.

Dans la partie montante 58 et dans la partie descendante 60, le fluide se déplace sensiblement parallèlement à l'axe C.

La partie montante 58 correspond, par exemple, à une partie de la cuve comprenant partiellement l'organe mené, l'organe de transmission et/ou la partie de l'organe de contrôle non enfoncée dans le combustible nucléaire.

Le débit primaire principal 56 présente une zone de retournement 62 entre la partie montante 58 et la partie descendante 60, la circulation du fluide formant un rebroussement dans la zone de retournement 62.

Dans la zone de retournement 62, le fluide se déplace sensiblement perpendiculairement à l'axe central C de manière à atteindre une entrée d'un générateur de vapeur 22.

Ainsi, le débit primaire principal 56 parcourt dans cet ordre la partie montante 58, la zone de retournement 62 puis la partie descendante 60.

Le déplacement du liquide primaire dans le débit primaire principal 56 est ici entraîné par au moins une pompe primaire 57 située au niveau de la partie descendante 60, par exemple, en entrée et/ou en sortie de générateur de vapeur.

L'actionneur électrique 18a est situé en dehors du débit primaire principal 56. Le débit primaire principal 56 ne traverse pas l'actionneur électrique 18a comprenant notamment le moteur 23 du mécanisme d'entraînement 18.

Plus particulièrement, l'actionneur électrique 18a est situé au-dessus de la zone de retournement 62 selon la direction parallèle à l'axe central C. Ainsi l'actionneur électrique 18a a une hauteur définie selon l'axe A située entre la zone de retournement 62 et le pressuriseur 20.

Ainsi, l'actionneur électrique 18a n'interagit pas directement avec les produits de la fission présents dans le débit primaire principal 56 en sortie de cœur 14 et ne subit pas les contraintes liés au fort débit et/ou à la forte vitesse du débit primaire principal 56.

Le réacteur nucléaire 10 comprend une ligne de refroidissement 64 du moteur 23 du mécanisme d'entraînement 18. La ligne de refroidissement prélève du liquide primaire du débit primaire principal 56 en sortie du cœur 14 comme représenté ou au refoulement de la ou des pompes primaires 57.

La durée de parcours entre le prélèvement du liquide primaire du débit primaire pincipal 56 et le passage du liquide primaire au niveau du moteur 23 est supérieure à une durée minimale.

Pour que le liquide primaire de la ligne de refroidissement atteigne le moteur 23 après ladite durée minimale, la vitesse du liquide est, par exemple, réduite par rapport à la vitesse dans le débit primaire principale 56, notamment grâce à l'utilisation de diaphragme(s).

La durée minimale est supérieure à 50 secondes, préférentiellement comprise entre 50 secondes et 150 secondes.

La durée minimale permet notamment que les éléments radioactifs produits par le cœur à courte durée de vie se sont principalement transformés en d'autres éléments, de manière à ce que lesdits éléments à courte durée de vie n'interagissent pas avec le moteur. On entend, par exemple, par éléments à courte durée de vie des éléments ayant une période radioactive inférieure à 10 secondes, comme par exemple, l'isotope 17 de l'azote (¹⁷N) qui présente une période radioactive sensiblement égale à 4,2s.

La présence d'une ligne de refroidissement différente du débit primaire principal 56 permet notamment d'avoir un débit et/ou une vitesse inférieur pour le refroidissement du mécanisme d'entraînement par rapport au débit et/ou à la vitesse pour le refroidissement du cœur. Cela permet de réduire les contraintes mécaniques dues au débit et/ou à la vitesse de liquide appliquées au mécanisme d'entraînement.

Typiquement le débit requis pour réfrigérer l'ensemble des actionneurs électriques est 10 000 fois inférieur au débit primaire principale 56 requis pour réfrigérer le cœur.

Alternativement, la ligne de refroidissement est indépendante ou correspond à un prélèvement du débit primaire principal 56 avant la traversée du cœur 14.

Le fonctionnement du réacteur nucléaire va maintenant être décrit.

On considère une configuration de départ dans laquelle l'organe de contrôle 16 est enfoncée d'une hauteur initiale dans le cœur 14. L'organe de contrôle est armé et l'élément déplaçable 54 est dans la position de maintien.

Pour déplacer l'organe de contrôle 16 de la réactivité du cœur 14 vers le bas ou vers le haut, le moteur 23 est activé tel que le rotor 25 est entraîné en rotation dans un sens. Le mouvement de rotation du rotor est transmis à la partie d'entraînement 28 du dispositif menant 26, puis au dispositif mené 30.

Suivant le sens de rotation du rotor 23, cette rotation va être convertie en mouvement de translation de l'organe de transmission soit vers le haut, soit vers le bas, parallèlement à l'axe central C.

En effet, la vis 32 est ici entraînée en rotation, de telle sorte que l'écrou 36 se déplace en translation le long de la vis. Ceci entraîne un déplacement de l'organe de contrôle 16 en translation parallèlement à l'axe central C.

S'il est nécessaire de descendre rapidement les organes de contrôle 16 de la réactivité du cœur 14 à l'intérieur des assemblages de combustible nucléaire, par exemple en cas d'urgence, on active le système de largage 52 de manière à ce que l'élément déplaçable 54 passe en position de largage. L'organe mené 30 n'est plus maintenu par l'élément déplaçable 54 sous l'épaulement 46, de sorte que l'organe mené 30 chute, entraînant l'organe de transmission 34 et l'organe de contrôle 16.

Après le largage, il est alors possible de remonter l'organe mené 30 pour réarmer l'organe de contrôle 16 de la réactivité du cœur 14.

Un tel réacteur nucléaire a une hauteur réduite du fait des mécanismes d'entraînement dans la cuve et permet de limiter les interactions entre le débit primaire principal et le moteur du mécanisme d'entraînement, d'un point de vue produits de fission mais également contraintes mécaniques appliquées par le fluide primaire.

Un tel mécanisme d'entraînement présente un encombrement radial réduit.

L'architecture du mécanisme d'entraînement, en particulier l'agencement télescopique de l'organe mené et de l'organe menant, permet notamment qu'il n'est pas nécessaire de prévoir un déport au-dessus du moteur, contrairement au mécanisme décrit dans FR 3 039 695 dans lequel l'organe menant dépasse du moteur. Aucun élément du mécanisme d'entraînement de l'invention n'est ici situé à une hauteur strictement supérieure à celle du moteur selon l'axe A.

Une telle architecture permet notamment d'utiliser un moteur de type galette, c'est-à-dire présentant une forme cylindrique sans orifice central, le moteur s'étendant au-dessus du reste du mécanisme d'entraînement. Le diamètre du moteur est, par exemple, sensiblement égal à celui du disque inscrit dans le pas des assemblages de combustible. Un tel moteur présente généralement une hauteur inférieure à celle d'un moteur tel que décrit précédemment. Ainsi, cela permet de réduire d'avantage l'encombrement en hauteur des mécanismes d'entraînement.

## Revendications

1. Réacteur nucléaire (10) comprenant :
- une cuve (12) ayant un axe central (C), contenant un liquide primaire,
- un cœur (14) comprenant du combustible nucléaire, le cœur (14) étant agencé dans le volume interne de la cuve (12),
- au moins une pompe primaire (57) générant un débit primaire principal (56) de liquide primaire dans la cuve (12), le débit primaire principal (56) traversant le cœur (14), montant selon une direction parallèle à l'axe central (C) dans une partie montante (58) du débit primaire principal (56) et descendant au travers d'au moins un générateur de vapeur (22) situé en périphérie dans la cuve (12) dans une partie descendante (60) du débit primaire principal (56),
- au moins un organe de contrôle (16) de la réactivité du cœur (14), l'organe de contrôle (16) s'étendant selon une direction respective (A) parallèle à l'axe central (C) et étant aligné avec le cœur (14) selon ladite direction respective (A),
- au moins un mécanisme d'entraînement (18) de l'organe de contrôle (16), agencé dans le volume interne de la cuve (12) et lié à l'organe de contrôle (16),
- un pressuriseur (20) situé dans une partie supérieure de la cuve (12) selon l'axe central (C), le pressuriseur (20) étant en communication avec le fluide primaire,
le mécanisme d'entraînement (18) comprenant un actionneur électrique (18a) et un mécanisme de transmission (18b),
**caractérisé en ce que** l'actionneur électrique (18a) est entièrement immergé dans le fluide primaire, et **en ce que** l'actionneur électrique (18a) est situé en dehors du débit primaire principal (56).

2. Réacteur nucléaire selon la revendication 1, dans lequel le débit primaire principal (56) présente une zone de retournement (62) entre la partie montante (58) et la partie descendante (60), la circulation du fluide formant un rebroussement dans la zone de retournement (62), l'actionneur électrique (18a) étant situé au-dessus de la zone de retournement (62) selon la direction de l'axe central (C) et sous le pressuriseur (20) selon une direction parallèle à l'axe central (C).

3. Réacteur nucléaire selon la revendication 1 ou 2, comprenant une ligne de refroidissement (64) de l'actionneur électrique (18a), la ligne de refroidissement (64) prélevant du liquide primaire du débit primaire principal (56) en sortie du cœur (14) ou à un refoulement de la pompe primaire (57), la durée de parcours entre le prélèvement du liquide primaire du débit primaire principal (56) et le passage du liquide primaire au niveau du moteur (23) étant supérieure à une durée minimale.

4. Réacteur nucléaire selon la revendication 3, dans lequel la durée minimale est supérieure à 50 secondes, préférentiellement comprise entre 50 secondes et 150 secondes.

5. Réacteur nucléaire selon l'une quelconque des revendications 1 à 4, dans lequel l'actionneur électrique (18a) comprend :
- un moteur (23) comprenant un stator (24) et un rotor (25) susceptible d'appliquer un couple rotatif, et
- un système de largage (52) de l'organe de contrôle (16) apte à larguer par chute gravitaire l'organe de contrôle (16) dans le cœur (14) ; et,
dans lequel le mécanisme de transmission (18b) comprend :
- un dispositif menant (26) comprenant une partie d'entraînement (28), la partie d'entraînement (28) étant liée au moteur (23) de sorte que le couple rotatif du moteur (23) est appliqué à la partie d'entraînement (28),
- un organe mené (30) comprenant l'un (32) d'une vis ou d'un écrou, l'organe mené (30) étant entraîné en rotation par la partie d'entraînement (28),
- un organe de transmission (34) formant l'autre (36) de la vis ou de l'écrou solidaire de l'organe de contrôle (16),
la vis et l'écrou coopérant de manière à ce qu'une rotation de la partie d'entraînement (28) du dispositif menant (26) par rapport au stator (24) se traduise par une translation de l'organe de contrôle (16) parallèlement à l'axe central (C).

6. Réacteur nucléaire selon la revendication 5, dans lequel l'organe de transmission (34) porte l'écrou (36), l'organe mené (30) comprenant la vis, l'écrou coopérant avec la vis sur le diamètre externe de ladite vis (30).

7. Réacteur nucléaire selon la revendication 5 ou 6, dans lequel l'organe mené (30) présente un orifice (44) s'étendant selon la direction respective (A) au moins dans une partie supérieure de l'organe mené (30) sur une longueur supérieure à un déplacement maximal de l'organe de contrôle (16), la partie d'entraînement (28) du dispositif menant (26) présentant une section polygonale s'étendant au moins partiellement dans ledit orifice (44) sur la longueur de l'orifice (44), l'orifice (44) présentant une section polygonale correspondante au moins dans une partie supérieure, l'organe mené (30) et la partie d'entraînement (28) étant solidaires en rotation.

8. Réacteur nucléaire selon la revendication 7, dans lequel l'organe mené (30) présente dans une partie supérieure au moins un trou (50) traversant reliant l'orifice (44) à l'extérieur de l'organe mené (30).

9. Réacteur nucléaire selon l'une quelconque des revendications 5 à 8, dans lequel le largage de l'organe de contrôle (16) est obtenu par largage de l'organe mené (30).

10. Réacteur nucléaire selon la revendication 9, dans lequel l'organe mené (30) comprend un épaulement (46), le système de largage (52) comprenant au moins un élément déplaçable (54) entre une position de maintien et une position de largage, l'élément déplaçable (54) s'étendant sous l'épaulement (46) selon la direction respective (A) dans la position de maintien et ne s'étendant pas sous l'épaulement (46) selon la direction respective (A) dans la position de largage.

## Patentansprüche

1. Kernreaktor (10), umfassend:
- einen Behälter (12), der eine Mittelachse (C) aufweist, der eine Primärflüssigkeit enthält,
- einen Kern (14), umfassend Kernbrennstoff, wobei der Kern (14) in dem inneren Volumen des Behälters (12) angeordnet ist,
- mindestens eine Primärpumpe (57), die einen primären Hauptstrom (56) von Primärflüssigkeit in dem Behälter (12) erzeugt, wobei der primäre Hauptstrom (56) den Kern (14) durchquert, in einem aufsteigenden Abschnitt (58) des primären Hauptstroms (56) in einer Richtung parallel zu der Mittelachse (C) aufsteigt und in einem absteigenden Abschnitt (60) des primären Hauptstroms (56) durch mindestens einen Dampferzeuger (22) absteigt, der sich an einer Peripherie in dem Behälter (12) befindet,
- mindestens ein Regelorgan (16) der Reaktivität des Kerns (14), wobei sich das Regelorgan (16) in einer jeweiligen Richtung (A) parallel zu der Mittelachse (C) erstreckt und mit dem Kern (14) in der jeweiligen Richtung (A) ausgerichtet ist,
- mindestens einen Antriebsmechanismus (18) für das Regelorgan (16), das in dem inneren Volumen des Behälters (12) angeordnet und mit dem Regelorgan (16) verbunden ist,
- einen Druckerzeuger (20), der sich in einem oberen Abschnitt des Behälters (12) entlang der Mittelachse (C) befindet, wobei der Druckerzeuger (20) in Kommunikation mit dem Primärfluid ist,
der Antriebsmechanismus (18) umfassend einen elektrischen Stellantrieb (18a) und einen Übertragungsmechanismus (18b),
**dadurch gekennzeichnet, dass** der elektrische Stellantrieb (18a) vollständig in das Primärfluid eingetaucht ist und dass sich der elektrische Stellantrieb(18a) außerhalb des primären Hauptstroms (56) befindet.

2. Kernreaktor nach Anspruch 1, wobei der primäre Hauptstrom (56) zwischen dem ansteigenden Abschnitt (58) und dem absteigenden Abschnitt (60) einen Wendebereich (62) aufweist, wobei der Fluidstrom in dem Wendebereich (62) eine Kehrtwende bildet, wobei sich das elektrische Stellglied (18a) in Richtung der Mittelachse (C) oberhalb des Wendebereichs (62) und in einer Richtung parallel zu der Mittelachse (C) unterhalb des Druckerzeugers (20) befindet.

3. Kernreaktor nach Anspruch 1 oder 2, umfassend eine Kühlleitung (64) für den elektrischen Stellantrieb (18a), wobei die Kühlleitung (64) Primärflüssigkeit aus dem primären Hauptstrom (56) am Ausgang des Kerns (14) oder an einer Förderleitung der Primärpumpe (57) entnimmt, wobei die Verlaufsdauer zwischen der Entnahme der Primärflüssigkeit aus dem primären Hauptstrom (56) und dem Durchgang der Primärflüssigkeit auf Ebene des Motors (23) größer ist als eine Mindestdauer.

4. Kernreaktor nach Anspruch 3, wobei die Mindestzeit mehr als 50 Sekunden ist, vorzugsweise zwischen 50 Sekunden und 150 Sekunden, beträgt.

5. Kernreaktor nach einem der Ansprüche 1 bis 4, wobei der elektrische Stellantrieb (18a) Folgendes umfasst:
- einen Motor (23), umfassend einen Stator (24) und einen Rotor (25), der ein Drehmoment anwenden kann, und
- ein Freigabesystem (52) für das Regelorgan (16), das in der Lage ist, das Regelorgan (16) durch Fallen durch Schwerkraft in den Kern (14) freizugeben; und wobei der Übertragungsmechanismus (18b) Folgendes umfasst:
- eine antreibende Vorrichtung (26), umfassend einen Antriebsabschnitt (28), wobei der Antriebsabschnitt (28) mit dem Motor (23) verbunden ist, sodass das Drehmoment des Motors (23) auf den Antriebsabschnitt (28) angewendet wird,
- ein angetriebenes Organ (30), umfassend das eine (32) von einer Schraube oder einer Mutter (32), wobei das angetriebene Organ (30) durch den Antriebsabschnitt (28) in Drehung versetzt wird,
- ein Übertragungselement (34), das das andere (36) von der Schraube oder der Mutter bildet, die fest mit dem Regelorgan (16) verbunden ist,
wobei die Schraube und die Mutter zusammenwirken, sodass eine Drehung des Antriebsabschnitts (28) der antreibenden Vorrichtung (26) in Bezug auf den Stator (24) zu einer Verschiebung des Regelorgans (16) parallel zu der Mittelachse (C) führt.

6. Kernreaktor nach Anspruch 5, wobei das Übertragungselement (34) die Mutter (36) trägt, das angetriebene Organ (30) die Schraube umfasst, die Mutter an dem Außendurchmesser der Schraube (30) mit der Schraube zusammenwirkt.

7. Kernreaktor nach Anspruch 5 oder 6, wobei das angetriebene Organ (30) eine Öffnung (44) aufweist, die sich mindestens in einem oberen Abschnitt des angetriebenen Organs (30) in der jeweiligen Richtung (A) über eine Länge erstreckt, die größer ist als eine maximale Verschiebung des Regelorgans (16), wobei der Antriebsabschnitt (28) der antreibenden Vorrichtung (26) einen polygonalen Querschnitt aufweist, der sich über die Länge der Öffnung (44) mindestens teilweise in die Öffnung (44) erstreckt, wobei die Öffnung (44) mindestens in einem oberen Abschnitt einen entsprechenden polygonalen Querschnitt aufweist, wobei das angetriebene Organ (30) und der Antriebsabschnitt (28) drehfest sind.

8. Kernreaktor nach Anspruch 7, wobei das angetriebene Organ (30) in einem oberen Abschnitt mindestens ein Durchgangsloch (50) aufweist, das die Öffnung (44) mit der Außenseite des angetriebenen Organs (30) verbindet.

9. Kernreaktor nach einem der Ansprüche 5 bis 8, wobei die Freigabe des Regelorgans (16) durch die Freigabe des angetriebenen Organs (30) erlangt wird.

10. Kernreaktor nach Anspruch 9, wobei das angetriebene Organ (30) eine Schulter (46) umfasst, wobei das Freigabesystem (52) mindestens ein Element (54) umfasst, das zwischen einer Halteposition und einer Freigabeposition beweglich ist, wobei sich das bewegliche Element (54) in der Halteposition in der jeweiligen Richtung (A) unter die Schulter (46) erstreckt und in der Freigabeposition nicht in der jeweiligen Richtung (A) unter die Schulter (46) erstreckt.

## Claims

1. A nuclear reactor (10), comprising:
- a vessel (12) having a central axis (C), containing a primary liquid,
- a core (14) comprising nuclear fuel, the core (14) being arranged in the internal volume of the vessel (12),
- at least one primary pump (57) generating a main primary flow (56) of primary liquid in the vessel (12), the main primary flow (56) passing through the core (14), rising in a direction parallel to the central axis (C) in a rising part (58) of the main primary flow (56) and descending through at least one vapor generator (22) located on the periphery in the vessel (12) in a descending part (60) of the main primary flow (56),
- at least one control member (16) for controlling the reactivity of the core (14), the control member (16) extending in a respective direction (A) parallel to the central axis (C) and being aligned with the core (14) in said respective direction (A),
- at least one movement mechanism (18) for moving the control member (16), arranged in the internal volume of the vessel (12) and linked to the control member (16),
- a pressurizer (20) situated in a top portion of the vessel (12) along the central axis (C), the pressurizer (20) being in communication with the primary fluid,
the movement mechanism (18) comprising an electric actuator (18a) and a transmission mechanism (18b),
**characterized in that** the electric actuator (18a) is completely immersed in the primary fluid, and **in that** the electric actuator (18a) is situated outside the main primary flow (56).

2. The nuclear reactor according to claim 1, wherein the main primary flow (56) has a reversal zone (62) between the rising part (58) and the descending part (60), the circulation of the fluid forming a turn back in the reversal zone (62), the electric actuator (18a) being located above the reversal zone (62) in the direction of the central axis (C) and below the pressurizer (20) in a direction parallel to the central axis (C).

3. The nuclear reactor according to claim 1 or 2, comprising a cooling line (64) of the electric actuator (18a), the cooling line (64) withdrawing primary liquid from the main primary flow (56) leaving the core (14) or at a discharge from the primary pump (57), the travel time between the withdrawal of the primary liquid from the main primary flow (56) and the passage of the primary liquid by the motor (23) being greater than a minimum duration.

4. The nuclear reactor according to claim 3, wherein the minimum duration is greater than 50 seconds, preferably between 50 seconds and 150 seconds.

5. The nuclear reactor according to any one of claims 1 to 4, wherein the electric actuator (18a) comprises:
- a motor (23) comprising a stator (24) and a rotor (25) able to apply a rotary torque, and
- a system (52) for releasing the control member (16) able to release the control member (16) into the core (14) by gravitational drop; and
wherein the transmission mechanism (18b) comprises:
- a driving device (26) comprising a movement part (28), the movement part (28) being linked to the motor (23) such that the rotary torque of the motor (23) is applied to the movement part (28),
- a driven member (30) comprising one (32) of a screw or a nut, the driven member (30) being driven in rotation by the movement part (28),
- a transmission member (34) forming the other (36) of the screw or the nut secured to the control member (16),
the screw and the nut cooperating such that a rotation of the movement part (28) of the driving device (26) relative to the stator (24) results in a translation of the control member (16) parallel to the central axis (C).

6. The nuclear reactor according to claim 5, wherein the transmission member (34) bears the nut (36), the driven member (30) comprising the screw, the nut cooperating with the screw on the outer diameter of said screw (30).

7. The nuclear reactor according to claim 5 or 6, wherein the driven member (30) has an orifice (44) extending along the respective direction (A) at least in an upper part of the driven member (30) over a length greater than a maximum movement of the control member (16), the movement part (28) of the driving device (26) having a polygonal section extending at least partially in said orifice (44) over the length of the orifice (44), the orifice (44) having a corresponding polygonal section at least in an upper part, the driven member (30) and the movement part (28) being secured in rotation.

8. The nuclear reactor according to claim 7, wherein the driven member (30) has, in an upper part, at least one through hole (50) connecting the orifice (44) to the outside of the driven member (30).

9. The nuclear reactor according to any one of claims 5 to 8, wherein the release of the control member (16) is obtained by releasing the driven member (30).

10. The nuclear reactor according to claim 9, wherein the driven member (30) comprises a shoulder (46), the release system (52) comprising at least one element (54) movable between a holding position and a release position, the movable element (54) extending below the shoulder (46) in the respective direction (A) in the holding position and not extending below the shoulder (46) in the respective direction (A) in the release position.
